(19) Europäisches Patentamt
European Patent Office
Office européen des brevets

(11) **EP 4 345 949 A1**

(12) **EUROPEAN PATENT APPLICATION**
published in accordance with Art. 153(4) EPC

(43) Date of publication:
   **03.04.2024 Bulletin 2024/14**

(21) Application number: **21958643.5**

(22) Date of filing: **28.09.2021**

(51) International Patent Classification (IPC):
   *H01M 4/505* (2010.01)   *H01M 10/0525* (2010.01)

(86) International application number:
   **PCT/CN2021/121261**

(87) International publication number:
   **WO 2023/050044 (06.04.2023 Gazette 2023/14)**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**
   Designated Validation States:
   **KH MA MD TN**

(71) Applicant: **Ningde Amperex Technology Limited
   Ningde, Fujian 352100 (CN)**

(72) Inventor: **YUAN, Guoxia
   Ningde, Fujian 352100 (CN)**

(74) Representative: **Icosa
   83 avenue Denfert-Rochereau
   75014 Paris (FR)**

(54) **ELECTROCHEMICAL APPARATUS AND ELECTRONIC APPARATUS**

(57) This application provides an electrochemical device and an electronic device. The electrochemical device includes a positive electrode, a negative electrode, and an electrolytic solution. A positive active material includes a manganese-containing composite material. A lithium manganese oxide characteristic peak (400) as a first diffraction peak and a lithium nickel cobalt manganese oxide characteristic peak (104) as a second diffraction peak are included in a range of 40° to 46° in an XRD diffraction pattern of the positive active material under a condition of 30% SOC to 40% SOC. A 2θ angle of the first diffraction peak is smaller than a 2θ angle of the second diffraction peak. A peak intensity of the first diffraction peak is A, a peak intensity of the second diffraction peak is B, and satisfying: $0.01 \leq B/A \leq 0.55$, thereby enhancing the high-temperature cycle performance and storage performance of the electrochemical device, and improving the low-temperature cycle performance of the electrochemical device.

FIG. 1

**Description**

**TECHNICAL FIELD**

This application relates to the technical field of electrochemistry, and in particular, to an electrochemical device and an electronic device.

**BACKGROUND**

By virtue of a high specific energy, a high working voltage, a low self-discharge rate, a small size, a light weight, and other characteristics, lithium-ion batteries are widely used in electrical energy storage, portable electronic devices, electric vehicles, and other fields.

With the increasingly wider application of the lithium-ion batteries in consumer terminals and other fields, people are imposing higher requirements on the charge-and-discharge cycle performance of the lithium-ion batteries. However, currently, the performance of lithium-ion batteries fades greatly under high temperatures.

**SUMMARY**

An objective of this application is to provide an electrochemical device and an electronic device to improve the performance of the electrochemical device under high temperatures. Specific technical solutions are as follows:

A first aspect of this application provides an electrochemical device, including a positive electrode, a negative electrode, and an electrolytic solution. The positive electrode includes a positive active material. The positive active material includes a manganese-containing composite material. A lithium manganese oxide LMO characteristic peak (400) as a first diffraction peak and a lithium nickel cobalt manganese oxide NCM characteristic peak (104) as a second diffraction peak are included in a range of 40° to 46° in an XRD (X-ray diffraction, X-ray diffraction) pattern of the positive active material under a condition of 30% SOC (State of Charge, State of Charge) to 40% SOC. A $2\theta$ angle of the first diffraction peak is smaller than a $2\theta$ angle of the second diffraction peak. A peak intensity of the first diffraction peak is A, a peak intensity of the second diffraction peak is B, and satisfying: $0.01 \le B/A \le 0.55$. Controlling the peak intensity A of the first diffraction peak and the peak intensity B of the second diffraction peak to satisfy $0.01 \le B/A \le 0.55$ can make the electrochemical device of this application has excellent high-temperature performance and relatively high cost competitiveness.

In an implementation solution of this application, under a condition of 60% SOC, in the XRD diffraction pattern of the positive active material, a peak area of the first diffraction peak is $I_1$, a peak area of the second diffraction peak is $I_2$, and satisfying: $0.1 \le I_2/I_1 \le 0.5$. Controlling the $I_2/I_1$ ratio within the foregoing range can improve the high-temperature cycle performance and storage performance of the electrochemical device.

In an implementation solution of this application, in a process of increasing a state of charge of the electrochemical device from 0% SOC to 100% SOC, the $2\theta$ angle of the first diffraction peak shifts toward a high angle by 0.5° to 1°. Controlling the offset towards a high angle of the $2\theta$ angle of the first diffraction peak falling within the foregoing range can improve the stability of an Mn-O bond in the positive active material and the high-temperature cycle performance of the electrochemical device.

In an implementation solution of this application, the electrochemical device satisfies at least one of the following conditions a) to c): a) based on a mass of the positive active material, a mass percentage of lithium nickel cobalt manganese oxide NCM is 0.5% to 35%; b) based on the mass of the positive active material, a mass percentage of lithium manganese oxide LMO is 50% to 92%; and c) the positive active material further includes a doping element, the doping element includes at least one of Al, Mg, or Nb, and, based on the mass of the positive active material, a mass percentage of the doping element is 0.1% to 2.5%. Controlling the content of NCM within the foregoing range helps to improve the high-temperature performance on the basis of controlling the cost of the electrochemical device. Controlling the content of LMO within the foregoing range helps to reduce the production cost of the electrochemical device. Controlling the content of the doping element within the foregoing range can improve the high-temperature performance such as high-temperature cycle performance and high-temperature storage performance of the electrochemical device.

In an implementation solution of this application, a particle size distribution of the positive active material satisfies: $0.9 \le (D_{v90} - D_{v10})/D_{v50} \le 2.0$. Controlling $(D_{v90} - D_{v10})/D_{v50}$ within the foregoing range can improve the low-temperature kinetic performance of the electrochemical device. Further, the low-temperature kinetic performance of the electrochemical device is even better when the particle size distribution of the positive active material satisfies $0.9 \le (D_{v90} - D_{v10})/D_{v50} \le 1.24$.

In an implementation solution of this application, the electrochemical device satisfies at least one of the following conditions d) to e): d) the electrolytic solution includes a solvent, the solvent includes dimethyl carbonate (DMC), ethylene carbonate (EC), and propylene carbonate (PC), and a mass ratio between the dimethyl carbonate and the ethylene carbonate is 3.1 to 7; and e) the electrolytic solution further includes at least one of a sultone compound, a multi-nitrile compound, a boron-containing lithium salt, ethylene sulfate, biphenyl, or vinylene carbonate. Controlling the mass ratio between the dimethyl carbonate and the ethylene carbonate within the foregoing range can enhance the high-temperature storage performance of the electrochemical device, and improve the low-temperature kinetic performance of the electrochemical device. The electrolytic solution according to this application includes the foregoing compounds, so as to enhance the high-temperature storage performance of the electrochemical device and improve the low-temperature kinetic performance of the electrochemical device.

In an implementation solution of this application, the electrochemical device satisfies at least one of the following conditions f) to g): f) the sultone compound includes at least one of 1,3-propane sultone, 1,3-butane sultone, or 2-fluoro-1,3-propane sultone, and, based on a mass of the electrolytic solution, a mass percentage of the sultone compound is 0.01% to 5%; and g) the multi-nitrile compound includes at least one of succinonitrile, adiponitrile, fumaronitrile, glutaronitrile, or 1,3,6-hexanetricarbonitrile, and, based on the mass of the electrolytic solution, a mass percentage of the multi-nitrile compound is 0.01% to 5%. The electrolytic solution according to this application includes the sultone compound, controlling the content of the sultone compound within the foregoing range can further enhance the high-temperature storage performance of the electrochemical device and improve the low-temperature kinetic performance of the electrochemical device. The electrolytic solution according to this application includes the multi-nitrile compound, controlling the content of the multi-nitrile compound within the foregoing range can further enhance the high-temperature storage performance of the electrochemical device and improve the low-temperature kinetic performance of the electrochemical device.

In an implementation solution of this application, the negative electrode includes a negative active material, and a particle size distribution of the negative active material satisfies: $1.8 \leq (D_{v90} - D_{v10})/D_{v50} \leq 2.8$. Controlling the particle size distribution of the negative active material within the foregoing range can enhance the high-temperature storage performance of the electrochemical device and improve the low-temperature kinetic performance of the electrochemical device.

A second aspect of this application provides an electronic device. The electronic device includes the electrochemical device according to any one of the foregoing implementation solutions.

This application provides an electrochemical device and an electronic device. A lithium manganese oxide LMO characteristic peak (400) as a first diffraction peak and a lithium nickel cobalt manganese oxide NCM characteristic peak (104) as a second diffraction peak exists in the XRD diffraction pattern of the positive active material of the electrochemical device under a condition of 30% SOC to 40% SOC. The $2\theta$ angle of the first diffraction peak is smaller than the $2\theta$ angle of the second diffraction peak. The peak intensity A of the first diffraction peak and the peak intensity B of the second diffraction peak satisfy: $0.01 \leq B/A \leq 0.55$, thereby making the electrochemical device containing the positive electrode of this application has excellent high-temperature cycle performance and storage performance, and improving the low-temperature cycle performance of the electrochemical device.

## BRIEF DESCRIPTION OF DRAWINGS

To describe the technical solutions in this application or the prior art more clearly, the following outlines the drawings to be used in the embodiments of this application or the prior art. Evidently, the drawings outlined below are merely a part of embodiments of this application.

FIG. 1 is an XRD diffraction pattern of a positive active material of a fully discharged (0% SOC) button battery assembled based on a lithium-ion battery according to Embodiment 1 of this application; and

FIG. 2 is an XRD diffraction pattern of a positive active material of a fully charged (100% SOC) button battery assembled based on a lithium-ion battery according to Embodiment 1 of this application.

## DETAILED DESCRIPTION OF EMBODIMENTS

To make the objectives, technical solutions, and advantages of this application clearer, the following describes this application in further detail with reference to drawings and embodiments. Evidently, the described embodiments are merely a part of but not all of the embodiments of this application. All other embodiments derived by a person of ordinary skill in the art based on the embodiments of this application fall within the protection scope of this application.

It is hereby noted that in specific embodiments of this application, this application is construed by using a lithium-ion battery as an example of the electrochemical device, but the electrochemical device according to this application is not limited to the lithium-ion battery.

A first aspect of this application provides an electrochemical device, including a positive electrode, a negative electrode, and an electrolytic solution. The positive electrode includes a positive active material. The positive active material includes a manganese-containing composite material. A lithium manganese oxide LMO characteristic peak (400) as a first diffraction peak and a lithium nickel cobalt manganese oxide NCM characteristic peak (104) as a second diffraction peak are included in a range of 40° to 46° in an XRD (X-ray diffraction, X-ray diffraction) pattern of the positive active material under a condition of 30% SOC (State of Charge, State of Charge) to 40% SOC. A $2\theta$ angle of the first diffraction peak is smaller than a $2\theta$ angle of the second diffraction peak. A peak intensity of the first diffraction peak is A, a peak intensity of the second diffraction peak is B, and satisfying: $0.01 \leq B/A \leq 0.55$. For example, the B/A ratio may be 0.01, 0.02, 0.05, 0.07, 0.1, 0.3, 0.5, 0.55, or any range formed by any two thereof.

The inventor of this application finds that controlling the peak intensity A of the first diffraction peak and the peak intensity B of the second diffraction peak to satisfy $0.01 \leq B/A \leq 0.55$ can make the electrochemical device of this application has excellent high-temperature storage performance and relatively high cost competitiveness. Without being limited to any theory, the inventor of this application holds that when the B/A ratio is deficient (for example, less than 0.01), it indicates that the peak intensity of the first diffraction peak is excessive, the content of LMO is excessive, and the high-temperature performance is poor; when the B/A ratio is excessive (for example, greater than 0.55), it indicates that the peak intensity of the first diffraction peak is deficient, the number of the LMO (110) planes is deficient, the content of LMO is deficient, and the electrochemical device is costly. Controlling the B/A ratio within the foregoing range can increase the number of (110) planes in favor of Li$^+$ deintercalation in the LMO of the positive active material. Easier Li$^+$ deintercalation improves the low-temperature performance of the electrochemical device. Compositing with a given amount of lithium nickel cobalt manganese oxide (NCM) enhances the high-temperature cycle performance and storage performance of the electrochemical device, improves the low-temperature performance of the electrochemical device, and helps to control the production cost of the electrochemical device and achieve cost efficiency of the electrochemical device.

In an implementation solution of this application, under a condition of 60% SOC, in the XRD diffraction pattern of the positive active material, a peak area of the first diffraction peak is $I_1$, a peak area of the second diffraction peak is $I_2$, and satisfying: $0.1 \leq I_2/I_1 \leq 0.5$. For example, the $I_2/I_1$ ratio may be 0.1, 0.2, 0.3, 0.4, 0.5, or any range formed by any two thereof. Without being limited to any theory, the inventor of this application holds that under the condition of 60% SOC, when the $I_2/I_1$ ratio is deficient (for example, less than 0.1), it indicates that the peak area of the first diffraction peak is deficient, and the content of NCM is deficient, thereby being adverse to the improvement of high-temperature cycle and storage performance of the electrochemical device; when the $I_2/I_1$ ratio is excessive (for example, greater than 0.5), the number of (110) planes in favor of Li$^+$ deintercalation in the LMO is deficient, and the low-temperature performance is poor. Controlling the $I_2/I_1$ ratio within the foregoing range can enhance the high-temperature cycle performance and storage performance of the electrochemical device.

In an implementation solution of this application, in a process of increasing a state of charge of the electrochemical device from 0% SOC to 100% SOC, the $2\theta$ angle of the first diffraction peak shifts toward a high angle by 0.5° to 1°. Controlling the offset towards a high angle of the $2\theta$ angle of the first diffraction peak falling within the foregoing range can improve the stability of an Mn-O bond in the positive active material and the high-temperature cycle performance of the electrochemical device.

In an implementation solution of this application, the electrochemical device satisfies at least one of the following conditions a) to c):

   a) Based on a mass of the positive active material, a mass percentage of NCM is 0.5% to 35%.

For example, the mass percentage of the NCM is 0.5%, 1%, 5%, 10%, 20%, 25%, 35%, or any range formed by any two thereof. Without being limited to any theory, a deficient content (for example, lower than 0.5%) of NCM is adverse to improving the high-temperature cycle and storage performance of the electrochemical device. An excessive content of NCM (for example, higher than 35%) affects the cost efficiency of the electrochemical device. Controlling the content of NCM within the foregoing range helps to improve the high-temperature performance of the electrochemical device and reduce the production cost thereof.

The type of the NCM is not particularly limited in this application, as long as the objectives of this application can be achieved. For example, the NCM may include at least one of NCM 811, NCM 622, NCM 523, or NCM 111.

b) Based on the mass of the positive active material, the mass percentage of LMO is 50% to 92%.

For example, the mass percentage of the LMO is 50%, 60%, 70%, 80%, 90%, 92%, or any range formed by any two thereof. Without being limited to any theory, when the content of LMO is deficient (for example, lower than 50%), the content of other types of positive active materials (for example, NCM) increases, thereby affecting the cost efficiency of the electrochemical device. When the content of LMO is excessive (for example, higher than 92%), the content of other types of positive active materials (for example, NCM) decreases, thereby being adverse to enhancing the high-temperature performance of the electrochemical device. Controlling the content of LMO within the foregoing range helps to reduce the production cost of the electrochemical device. In this application, the positive active material may contain lithium iron phosphate LFP in addition to the NCM and LMO.

c) The positive active material further includes a doping element, the doping element includes at least one of Al, Mg, or Nb, and based on the mass of the positive active material, a mass percentage of the doping element is 0.1% to 2.5%.

For example, the mass percentage of the doping element is 0.1%, 0.2%, 0.5%, 1%, 1.2%, 1.5%, 2%, 2.5%, or any range formed by any two thereof. Without being limited to any theory, a deficient content (for example, lower than 0.1%) of the doping element degrades the high-temperature performance of the electrochemical device. An excessive content of the doping element (for example, higher than 2.5%) brings a limited effect in improving the high-temperature performance of the electrochemical device, and decreases the specific capacity of the electrochemical device. Controlling the content of the doping element within the foregoing range can improve the high-temperature performance and specific capacity, such as high-temperature cycle performance and high-temperature storage performance, of the electrochemical device.

In an implementation solution of this application, a particle size distribution of the positive active material satisfies: $0.9 \leq (D_{v90} - D_{v10})/D_{v50} \leq 2.0$. For example, $(D_{v90} - D_{v10})/D_{v50}$ is 0.9, 1, 1.5, 1.8, 2.0, or any range formed by any two thereof. Without being limited to any theory, an excessive ratio of $(D_{v90} - D_{v10})/D_{v50}$ (for example, greater than 2.0) is adverse to enhancing the low-temperature kinetic performance of the electrochemical device. When $(D_{v90} - D_{v10})/D_{v50}$ is deficient (for example, less than 0.9), the processing difficulty increases, and the manufacturing cost of the electrochemical device increases. Controlling $(D_{v90} - D_{v10})/D_{v50}$ within the foregoing range can improve the low-temperature kinetic performance of the electrochemical device and reduce the manufacturing cost of the electrochemical device.

In this application, $D_{v90}$ is a particle diameter of specimen particles measured when the cumulative volume percentage of the measured particles calculated from a small-diameter side reaches 90% of the total volume of the specimen particles in a volume-based particle size distribution; $D_{v50}$ is a particle diameter of the specimen particles measured when the cumulative volume percentage of the measured particles calculated from the small-diameter side reaches 50% of the total volume of the specimen particles in a volume-based particle size distribution; and $D_{v10}$ is a particle diameter of the specimen particles measured when the cumulative volume percentage of the measured particles calculated from the small-diameter side reaches 10% of the total volume of the specimen particles in a volume-based particle size distribution.

In an implementation solution of this application, the electrochemical device satisfies at least one of the following conditions d) to e):

d) The electrolytic solution includes a solvent, the solvent includes dimethyl carbonate DMC, ethylene carbonate EC, and propylene carbonate PC, and a mass ratio between the DMC and the EC is 3.1 to 7. For example, the mass ratio between the dimethyl carbonate and the ethylene carbonate is 3.1, 4, 4.5, 5, 6, 7, or any range formed by any two thereof. Controlling the mass ratio between the dimethyl carbonate and the ethylene carbonate within the foregoing range can enhance the high-temperature storage performance of the electrochemical device and improve the low-temperature kinetic performance of the electrochemical device.

e) The electrolytic solution further includes at least one of a sultone compound, a multi-nitrile compound, a boron-containing lithium salt, ethylene sulfate, biphenyl, or vinylene carbonate. The electrolytic solution according to this application includes the foregoing compound, and therefore, can enhance the high-temperature storage performance of the electrochemical device and improve the low-temperature kinetic performance of the electrochemical device.

In an implementation solution of this application, the electrochemical device satisfies at least one of the following conditions f) to g):

f) The sultone compound includes at least one of 1,3-propane sultone, 1,3-butane sultone, or 2-fluoro-1,3-propane sultone, and based on a mass of the electrolytic solution, a mass percentage of the sultone compound is 0.01% to 5%. For example, the mass percentage of the sultone compound is 0.01%, 0.1%, 1%, 5%, or any range formed by any two thereof. The electrolytic solution according to this application includes the foregoing sultone compound, and controlling the content of the sultone compound within the foregoing range, can further enhance the high-temperature storage performance of the electrochemical device and improve the low-temperature kinetic performance of the electrochemical device.

g) The multi-nitrile compound includes at least one of succinonitrile, adiponitrile, fumaronitrile, glutaronitrile, or 1,3,6-hexanetricarbonitrile. Based on the mass of the electrolytic solution, the mass percentage of the multi-nitrile compound is 0.01% to 5%. For example, the mass percentage of the multi-nitrile compound is 0.01%, 0.1%, 1%, 5%, or any range formed by any two thereof. The electrolytic solution according to this application includes the foregoing multi-nitrile compound, and controlling the content of the multi-nitrile compound within the foregoing range, can further enhance the high-temperature storage performance of the electrochemical device and improve the low-temperature kinetic performance of the electrochemical device.

In an implementation solution of this application, the negative electrode includes a negative active material, and a particle size distribution of the negative active material satisfies: $1.8 \leq (D_{v90} - D_{v10})/D_{v50} \leq 2.8$. For example, $(D_{v90} - D_{v10})/D_{v50}$ is 1.8, 2.0, 2.2, 2.5, 2.8, or any range formed by any two thereof. Controlling the particle size distribution of the negative active material within the foregoing range can enhance the high-temperature storage performance of the electrochemical device and improve the low-temperature kinetic performance of the electrochemical device.

The method for preparing the manganese-containing composite material doped with a doping element is not particularly limited in this application. The preparation method commonly used by a person skilled in the art may be employed. For example, in a process of synthesizing the manganese-containing composite material, $LiMn_2O_4$ is doped with an aluminum-containing compound (such as $Al_2O_3$, $Al(OH)_3$, and $AlF_3$), a magnesium-containing compound (such as $MgO$), or a niobium-containing compound (such as $Nb_2O_5$ and $NbF_5$) to obtain the manganese-containing composite material. In addition, in this application, by adjusting the content of the doping element in the manganese-containing composite material, for example, by controlling the dosage of the compound containing the doping element, the content of the doping element in the positive active material can be changed. The adjustment process is not particularly limited in this application, as long as the objectives of this application can be achieved.

The positive current collector is not particularly limited in this application, and may be any positive current collector well known in the art. For example, the positive current collector may be an aluminum foil, an aluminum alloy foil, or a composite current collector.

The negative current collector is not particularly limited in this application, and a material such as a metal foil or a porous metal sheet may be used. For example, the negative current collector is a foil or porous plate made of a metal such as copper, nickel, titanium, or iron, or an alloy thereof, such as a copper foil. The negative active material layer includes a negative active material, a conductive agent, a binder, and a thickener. The negative active material is not particularly limited, and may be any negative active material well known in the art. For example, the negative active material may include at least one of artificial graphite, natural graphite, mesocarbon microbead (MCMB), soft carbon, hard carbon, silicon, silicon-carbon compound, SiO, Li-Sn alloy, Li-Sn-O alloy, Sn, SnO, $SnO_2$, spinel-structured lithium titanium oxide $Li_4Ti_5O_{12}$, Li-Al alloy, or metallic lithium. The conductive agent may be at least one of graphite, superconductive carbon, acetylene black, carbon black, Ketjen black, carbon dots, carbon nanotubes, graphene, or carbon nanofibers. The binder may be at least one of styrene butadiene rubber (SBR), polyvinylidene difluoride (PVDF), polytetrafluoroethylene (PTFE), polyvinyl butyral (PVB), water-based acrylic resin (water-based acrylic resin), or carboxymethyl cellulose (CMC). The thickener may be carboxymethyl cellulose (CMC).

The substrate of the separator according to this application includes, but is not limited to, at least one of polyethylene (PE), polypropylene (PP), polyethylene terephthalate (PET), polyimide (PI), or aramid fiber. For example, the polyethylene includes a component selected from at least one of high-density polyethylene, low-density polyethylene, and ultra-high-molecular-weight polyethylene. Especially, the polyethylene and the polypropylene are highly effective in preventing short circuits, and can improve stability of the electrochemical device through a shutdown effect. The substrate may be a single-layer structure or a multi-layer hybrid composite structure with a thickness of 3 μm to 20 μm.

A second aspect of this application provides an electronic device. The electronic device includes the electrochemical device described in the foregoing implementation solution of this application.

The electronic device according to this application is not particularly limited, and may be any electronic device known in the prior art. In some embodiments, the electronic device may include, but is not limited to, a notebook computer, a pen-inputting computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a power-assisted bicycle, a bicycle, a lighting appliance, a toy, a game console, a watch, an electric tool, a flashlight, a camera, a large household battery, a lithium-ion capacitor, and the like.

The preparation process of the electrochemical device is well known to a person skilled in the art, and is not particularly limited in this application. For example, a process of manufacturing a lithium-ion battery may include: stacking a positive electrode and a negative electrode that are separated by a separator, performing operations such as winding and folding as required, placing them into a housing, injecting an electrolytic solution into the housing, and sealing the housing. In addition, an overcurrent prevention element, a guide plate, and the like may be further placed into the housing as required, so as to prevent the rise of internal pressure, overcharge, and overdischarge of the lithium-ion battery.

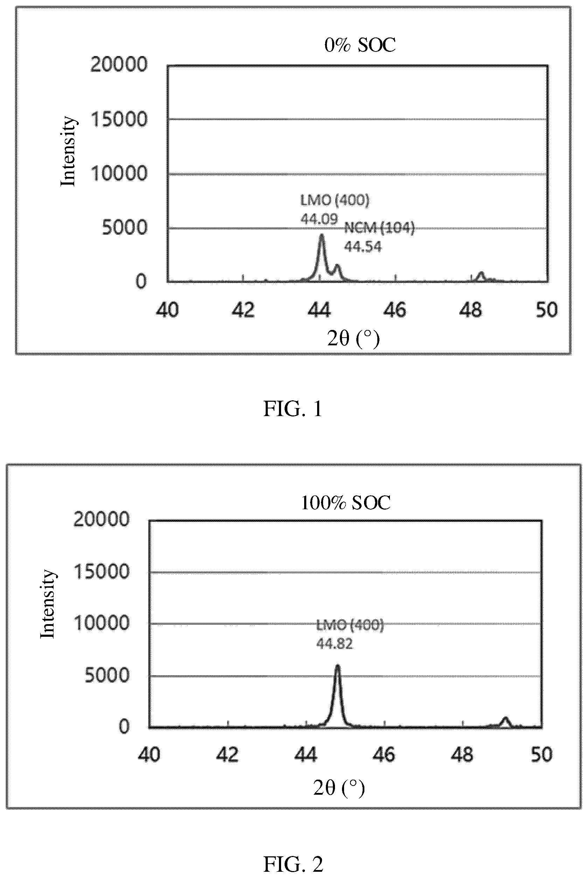

As shown in FIG. 1, in an XRD diffraction pattern of a positive active material of a fully discharged (0% SOC) button battery assembled from a positive electrode plate taken out of a disassembled lithium-ion battery according to Embodiment 1, the 2θ angle of the first diffraction peak is 44.09°. As shown in FIG. 2, in an XRD diffraction pattern of a positive active material of a fully charged (100% SOC) button battery assembled from a positive electrode plate taken out of a disassembled lithium-ion battery according to Embodiment 1, the 2θ angle of the first diffraction peak is 44.82°. Evidently, in a process of increasing the state of charge of the lithium-ion battery from 0% SOC to 100% SOC, the 2θ angle shifts toward a high angle by 0.73°.

The implementations of this application are described below in more detail with reference to embodiments and comparative embodiments. Various tests and evaluations are performed in accordance with the following methods. In addition, unless otherwise specified, "fraction" and "%" are based by mass.

**Test Methods and Devices**

Testing the ratio of the peak intensity B of the second diffraction peak to the peak intensity A of the first diffraction peak:

Charging the lithium-ion battery until the voltage reaches 4.2 V, and then discharging the battery until the voltage reaches 2.8 V to complete one cycle. Completing a total of two cycles according to the foregoing steps, and then charging the lithium-ion battery to a different SOC (for example, any value between 30% SOC and 40% SOC). Subsequently, disassembling the lithium-ion battery, taking out the positive electrode plate, immersing the positive electrode plate in dimethyl carbonate (DMC) for 30 minutes. Removing the electrolytic solution and by-products from the surface of the positive electrode plate, and then drying the positive electrode plate in a ventilating cabinet for 4 hours. Scraping a positive active material layer off with a scraper to obtain a positive active material layer powder, and then putting the positive active material layer powder into a specimen holder of an XRD test instrument (Model: Bruker D8). Scanning at speed of 2°/min in a scan angle range of 10° to 90° to obtain an XRD diffraction pattern. Taking the peak intensities corresponding to a lithium nickel cobalt manganese oxide characteristic peak (104) and a lithium manganese oxide characteristic peak (400) of the positive active material from the XRD diffraction pattern to obtain a ratio of B to A.

Testing the offset of the 2θ angle of the first diffraction peak:

Charging the lithium-ion battery until the voltage reaches 4.2 V, and then discharging the battery until the voltage reaches 2.8 V to complete one cycle. Completing a total of two cycles according to the foregoing steps, and then taking out the positive electrode plate. Erasing the active material from one side of the positive electrode plate by using NMP. Punching the remaining single-side coated electrode plate into a small disc with a diameter of 14 mm. Assembling the small disc into a button battery. Charging the lithium-ion battery until the voltage reaches 4.3 V, and then discharging the battery until the voltage reaches 3 V to complete one cycle. Completing a total of two cycles according to the foregoing steps, and then charging the battery to a fully charged state. Disassembling the fully charged button battery and the fully discharged button battery separately to obtain electrode plates in different states. Scraping the positive active material layer off with a scraper, and then putting the positive active material layer powder into a specimen holder of an XRD test instrument (Model: Bruker D8). Scanning at a speed of 2°/min in a scan angle range of 10° to 90° to obtain an XRD diffraction pattern. Comparing the offset of the 2θ angle of the first diffraction peak (400) of the positive active material between a fully discharged state and a fully charged state.

Testing the content of the elements in the positive active material:

Scraping, by using a scraper, the active material off a positive electrode plate cleaned with DMC, and dissolving the active material with a mixed solvent (for example, 0.4 g of positive active material is dissolved by a mixed solvent, where the mixed solvent is 10 mL of aqua regia (the aqua regia is nitric acid mixed with hydrochloric acid at a volume ratio of 1: 1) mixed with 2 mL of HF. Bringing the solution to a predetermined volume of 100 mL, and then measuring the content of each element such as Ni, Co, Mn, Al, Mg, and Nb in the solution by using an ICP (Inductively coupled plasma, inductively coupled plasma) analyzer.

Slicing a dried positive electrode plate, and then observing the section of the slice by using a scanning electron microscope (SEM). Finding the particles in the section, and then determining the components of a single particle with an energy dispersive spectrometer (EDS) based on the content of each element measured by the ICP. For example, determining a chemical formula $LiNi_aCo_bMn_{(1-a-b)}O_2$ of a single particle. Subsequently, based on the chemical formula, the EDS data, and ICP data, inversely deducing the content of the substance represented by the chemical formula in the positive active material.

Testing the particle size of the particles in the positive active material layer:

Calcining the disassembled positive electrode plate or negative electrode plate into powder at 400°C in a vacuum environment. Measuring the particle size with a particle size analyzer to obtain the values of $D_{v10}$, $D_{v50}$, and $D_{v90}$.

Determining the ratio of -10 °C discharge capacity to 25 °C discharge capacity:

Performing constant-current charging at a charge current of 0.5 C in a 25 °C environment until the voltage reaches an upper limit 4.2 V. Subsequently, adjusting the environment to -10 °C, leaving the battery to stand for 2 hours, and then performing constant-current discharge at a discharge current of 0.2 C until the voltage finally reaches 2.8 V. Calculating the 0.2 C first-cycle discharge capacity as the capacity of the battery, and recording this capacity as a first capacity.

Performing constant-current charging at a charge current of 0.5 C in a 25 °C environment until the voltage reaches an upper limit 4.2 V. Subsequently, performing constant-current discharge at a discharge current of 0.2 C until the voltage finally reaches 2.8 V. Calculating the 0.2 C first-cycle discharge capacity as the capacity of the battery, and recording this capacity as a second capacity.

$$\text{Ratio of } -10 \text{ °C discharge capacity to } 25 \text{ °C discharge capacity} = \text{(first capacity/second capacity)} \times 100\%.$$

Testing the cycle performance of the lithium-ion battery:
Charging and discharging the lithium-ion battery repeatedly according to the following steps, and calculating the discharge capacity retention rate of the lithium-ion battery:
Testing the 10 °C cycle performance:
Charging and discharging the lithium-ion battery in a 10 °C environment initially. Charging the battery at a charge current of 0.5 C until the voltage reaches 4.2 V, and then discharging the battery at a constant current of 1 C until the voltage finally reaches 2.8 V. Recording the discharge capacity as a first-cycle discharge capacity. Repeating the foregoing steps to complete 500 charge-and-discharge cycles, and recording the 500th-cycle discharge capacity.

$$10 \text{ °C cycle capacity retention rate} = (500^{\text{th}}\text{-cycle discharge capacity/first-cycle discharge capacity}) \times 100\%.$$

Testing the 50 °C cycle performance:
Charging and discharging the lithium-ion battery in a 50 °C environment initially. Charging the battery at a charge current of 0.5 C until the voltage reaches 4.2 V, and then discharging the battery at a constant current of 1 C until the voltage finally reaches 2.8 V. Recording the discharge capacity as a first-cycle discharge capacity. Repeating the foregoing steps to complete 500 charge-and-discharge cycles, and recording the 500th-cycle discharge capacity.

$$50 \text{ °C cycle capacity retention rate} = (500^{\text{th}}\text{-cycle discharge capacity/first-cycle discharge capacity}) \times 100\%.$$

Testing the high-temperature storage performance of the lithium-ion battery

Charging the battery at a charge current of 0.5 C in a 25 °C environment until the voltage reaches an upper limit 4.2 V, and then performing constant-current discharge at a discharge current of 0.5 C until the voltage finally reaches 2.8 V. Recording the discharge capacity, and recording this capacity as a before-storage capacity.
Charging the battery at a constant current of 0.5 C until the voltage reaches 3.85 V, and then charging the battery at a constant voltage of 4.2 V until the current drops below 0.05 C. Storing the battery in 60 °C oven for 7 days. Performing constant-current discharge at a discharge current of 0.5 C until the voltage finally reaches 2.8 V. Subsequently, charging the battery at a charge current of 0.5 C until the voltage reaches 4.2 V, and then performing constant-current discharge at a discharge current of 0.5 C until the voltage reaches 2.8 V, thereby completing one cycle. Completing three cycles, and recording the third-cycle discharge capacity as an after-storage capacity.

$$\text{Capacity retention rate of the lithium-ion battery} = \text{(after-storage capacity/before-storage capacity)} \times 100\%.$$

Testing 0.1 C specific discharge capacity:
Performing a charge-and-discharge test on the lithium-ion battery prepared in each embodiment and each comparative embodiment by using a LAND series battery test system to evaluate the charge-and-discharge performance of the lithium-ion battery. Charging the battery at a constant current of 0.1 C rate under a normal temperature until the voltage reaches 4.2 V. Further, charging the battery at a constant voltage of 4.2 V until the current drops below 0.05 C so that the battery is in a 4.2 V fully charged state. Subsequently, discharging the battery at a constant current of 0.1 C rate until the voltage reaches 2.8 V, thereby completing one cycle. Repeating the foregoing steps on the electrochemical device to complete two cycles, so as to obtain a second-cycle discharge capacity, that is, 0.1 C discharge capacity.

0.1 C specific discharge capacity = 0.1 C discharge capacity/mass of the active material of the electrode plate.

**Embodiment 1**

<Preparing lithium manganese oxide>

Weighing out 203.3 kg of lithium carbonate, 780.6 kg of trimanganese tetroxide, 29.68 kg of aluminum oxide, and 5.65 kg of niobium pentoxide, and mixing them in a high-speed mixer at a speed of 300 r/min for 20 minutes. Putting the mixture in an air kiln, and increasing the temperature at a speed of 5 °C/min until 790 °C, and keeping the temperature for 24 hours. Naturally cooling the mixture, and then taking it out. Passing the mixture through a 300-mesh sieve to obtain lithium manganese oxide (LMO).

<Preparing a hybrid positive active material>

Weighing out 180 kg of synthesized LMO and 20 kg of commercial polycrystalline $LiNi_{0.55}Co_{0.15}Mn_{0.3}O_2$ (NCM), adding 15 kg of anhydrous ethanol, and then adding 2 kg of glucose. Mixing well and drying, and then putting the mixture in an air kiln, and increasing the temperature to 400 °C at a speed of 5 °C/min. Keeping the temperature for 4 hours. Naturally cooling the mixture and then taking it out. Passing the mixture through a 300-mesh sieve to obtain a hybrid positive active material, that is, a manganese-containing composite material.

<Preparing a positive electrode plate>

Mixing the hybrid positive active material, that is, the manganese-containing composite material, with polyvinylidene difluoride (PVDF) as a binder, conductive carbon black, and carbon nanotubes (CNT) at a mass ratio of 95: 2: 1.8: 1.2, and then adding N-methyl-pyrrolidone (NMP) as a solvent. Stirring with a vacuum mixer to blend the mixture into a homogeneous positive slurry with a solid content of 75%. Coating one surface of a 13-$\mu$m-thick aluminum foil with the positive slurry evenly, and drying the aluminum foil at 90 °C. Performing cold calendering to obtain a positive electrode plate coated with a positive active material layer that is 95 $\mu$m thick in total. Subsequently, repeating the foregoing steps on the other surface of the positive electrode plate to obtain a positive electrode plate coated with the positive active material layer on both sides. Cutting the positive electrode plate into a size of 74 mm $\times$ 867 mm, welding tabs, and leaving the positive electrode plate ready for use.

<Preparing a negative electrode plate>

Mixing artificial graphite as a negative active material, styrene butadiene rubber (SBR), and carboxymethyl cellulose (CMC) at a mass ratio of 98: 1: 1, adding deionized water as a solvent, blending the mixture into a slurry with a solid content of 70%, and stirring the slurry well. Coating one surface of a 8-$\mu$m-thick copper foil with the slurry evenly, and drying the foil at 110 °C. Performing cold calendering to obtain a negative electrode plate coated with a 65-$\mu$m-thick negative active material layer on a single side. Subsequently, repeating the foregoing coating steps on the other surface of the negative electrode plate to obtain a negative electrode plate coated with the negative active material layer on both sides. Cutting the negative electrode plate into a size of 74 mm $\times$ 867 mm, welding tabs, and leaving the negative electrode plate ready for use.

<Preparing a separator>

Using a 15-$\mu$m-thick polyethylene (PE) porous polymer film as a separator.

<Preparing an electrolytic solution>

Mixing dimethyl carbonate (DMC), ethylene carbonate (EC), and propylene carbonate (PC) at a mass ratio of 6.2: 1: 1 in an environment with a moisture content less than 10 ppm, so as to obtain a nonaqueous organic solution. Adding lithium hexafluorophosphate ($LiPF_6$) into the nonaqueous organic solvent to dissolve, and mixing well to obtain an electrolytic solution. The mass percentage of the $LiPF_6$ in the electrolytic solution is 12.5%.

<Preparing a lithium-ion battery>

Stacking the positive electrode plate, separator, and negative electrode plate in Embodiment 1 sequentially in such a way that the separator is located between the positive electrode plate and the negative electrode plate to serve a function of separation, and winding the stacked structure to obtain an electrode assembly. Putting the electrode assembly into an aluminum plastic film package, dehydrating the packaged electrode assembly at 80 °C, and then injecting the prepared electrolytic solution. Performing vacuum sealing, standing, chemical formation, and shaping to obtain a lithium-ion battery.

<Charging a lithium-ion battery>

Charging the prepared lithium-ion battery so that the SOC of the lithium-ion battery reaches 30%. Table 1 shows the first diffraction peak, the second diffraction peak, the B/A ratio, and the performance parameters of the lithium-ion battery.

**Embodiment 2 to Embodiment 4**

Identical to Embodiment 1 except that, in <Preparing a hybrid positive active materials the content of NCM in the positive active material is adjusted as shown in Table 1, so as to adjust the B/A ratio.

**Embodiment 5 to Embodiment 7**

Identical to Embodiment 2 except that, in <Preparing lithium manganese oxide>, the content of the doping element is adjusted as shown in Table 2.

**Embodiment 8 to Embodiment 9**

Identical to Embodiment 2 except that, in <Preparing lithium manganese oxide>, a magnesium compound MgO is added in the LMO, and the type and content of the doping element are adjusted as shown in Table 2.

**Embodiment 10 to Embodiment 11**

Identical to Embodiment 2 except that, in <Preparing lithium manganese oxide>, the type and content of the doping element are adjusted as shown in Table 2.

**Embodiment 12 to Embodiment 17**

Identical to Embodiment 2 except that, in <Preparing a positive electrode plate>, the $D_{v50}$ and the $(D_{v90}-D_{v10})/D_{v50}$ of the positive active material are adjusted as shown in Table 3.

**Embodiment 18 to Embodiment 23**

Identical to Embodiment 2 except that, in <Preparing an electrolytic solution>, on the basis of keeping the same content of PC and $LiPF_6$ in the electrolytic solution as in Embodiment 2, the mass ratio between DMC and EC in the nonaqueous organic solvent is adjusted as shown in Table 4.

**Embodiment 24 to Embodiment 32**

Identical to Embodiment 2 except: the electrolytic solution prepared in Embodiment 2 is used as a base electrolytic solution, and is further added with the sultone compound, multi-nitrile compound, and biphenyl that are shown in Table 5, so that the content of such additives is same as that shown in Table 5.

**Embodiment 33 to Embodiment 38**

Identical to Embodiment 2 except that, in <Preparing a negative electrode plate>, the $D_{v50}$ and the $(D_{v90}-D_{v10})/D_{v50}$ of the negative active material are shown in Table 6.

**Comparative Embodiment 1 to Comparative Embodiment 2**

Identical to Embodiment 1 except that, in <Preparing a hybrid positive active materials the content of NCM in the positive active material is adjusted as shown in Table 1, so as to adjust the B/A ratio.

**Comparative Embodiment 3**

<Preparing lithium manganese oxide>

Weighing out 203.3 kg of lithium carbonate and 780.6 kg of trimanganese tetroxide, and mixing them in a high-speed mixer at a speed of 300 r/min for 20 minutes. Putting the mixture in an air kiln, and increasing the temperature at a speed of 5 °C/min until 790 °C, and keeping the temperature for 24 hours. Naturally cooling the mixture, and then taking it out. Passing the mixture through a 300-mesh sieve to obtain lithium manganese oxide (LMO).

<Preparing a hybrid positive active material>

Weighing out 140 kg of synthesized LMO and 60 kg of commercial polycrystalline $LiNi_{0.55}Co_{0.15}Mn_{0.3}O_2$ (NCM), adding 15 kg of anhydrous ethanol, and then adding 2 kg of glucose. Mixing well and drying, and then putting the mixture in an air kiln, and increasing the temperature to 400 °C at a speed of 5 °C/min. Keeping the temperature for 4 hours. Naturally cooling the mixture and then taking it out. Passing the mixture through a 300-mesh sieve to obtain a hybrid positive active material.

**Table 1 Test results of the lithium-ion battery at 30% SOC**

| | Content of NCM in positive active material (%) | Peak intensity A of first diffraction peak | Peak intensity B of second diffraction peak | B/A | Capacity recovery rate after 7 days of storage under 60 °C | Manufacturing cost based on positive electrode in Comparative Embodiment 1 |
|---|---|---|---|---|---|---|
| Embodiment 1 | 10 | 5034 | 558 | 0.111 | 90.3% | 132% |
| Embodiment 2 | 20 | 4515 | 1209 | 0.268 | 93.5% | 164% |
| Embodiment 3 | 30 | 4109 | 1987 | 0.484 | 95.6% | 196% |
| Embodiment 4 | 5 | 5876 | 368 | 0.063 | 86.7% | 116% |
| Comparative Embodiment 1 | 0 | 5789 | 0 | 0 | 70.5% | 100% |
| Comparative Embodiment 2 | 36 | 3898 | 2269 | 0.582 | 95.9% | 220% |
| Comparative Embodiment 3 | 30 | 3098 | 2076 | 0.670 | 85.6% | 188% |

**Table 2**

| | Type of doping element | Content of doping element (%) | $I_2/I_1$ | Offset of 2θ angle of first diffraction peak | Cycle capacity retention rate under 50 °C | Capacity recovery rate after 7 days of storage under 60 °C | 0.1 C specific discharge capacity (mAh/g) |
|---|---|---|---|---|---|---|---|
| Embodiment 2 | Al+Nb | 1.54 (Al: 1.23, Nb: 0.31) | 0.251 | 0.73 | 73.5% | 93.5% | 112 |

(continued)

|  | Type of doping element | Content of doping element (%) | $I_2/I_1$ | Offset of $2\theta$ angle of first diffraction peak | Cycle capacity retention rate under 50 °C | Capacity recovery rate after 7 days of storage under 60 °C | 0.1 C specific discharge capacity (mAh/g) |
|---|---|---|---|---|---|---|---|
| Embodiment 5 | Al+Nb | 1.32 (Al: 1.01, Nb: 0.31) | 0.278 | 0.75 | 70.6% | 92.3% | 112.8 |
| Embodiment 6 | Al+Nb | 1.35 (Al: 1.23, Nb: 0.12) | 0.263 | 0.78 | 72.2% | 90.4% | 113.2 |
| Embodiment 7 | Al+Nb | 1.75 (Al: 1.23, Nb: 0.52) | 0.249 | 0.65 | 73.7% | 95.5% | 111.4 |
| Embodiment 8 | Al+Nb+Mg | 1.55 (Al: 1.02, Nb: 0.31, Mg: 0.22) | 0.255 | 0.76 | 73.0% | 93.1% | 111.6 |
| Embodiment 9 | Al+Nb+Mg | 1.34 (Al: 1.01, Nb: 0.12, Mg: 0.21) | 0.266 | 0.80 | 71.2% | 89.3% | 112.4 |
| Embodiment 10 | Al+Nb+Mg | 2.5 (Al: 1.30, Nb: 0.75, Mg: 0.45) | 0.104 | 0.59 | 76.8% | 96.5% | 108.8 |
| Embodiment 11 | Al+Nb+Mg | 3.0 (Al: 1.50, Nb: 0.85, Mg: 0.65) | 0.098 | 0.54 | 76.7% | 96.1% | 100.6 |

**Table 3**

|  | Type of doping element | Content of doping element (%) | $D_{v50}$ of positive active material ($\mu$m) | $(D_{v90}-D_{v10})/D_{v50}$ | B/A (30% SOC) | Ratio of -10 °C discharge capacity to 25 °C discharge capacity |
|---|---|---|---|---|---|---|
| Embodiment 2 | Al+Nb | 1.54 (Al: 1.23, Nb: 0.31) | 10.9 | 1.42 | 0.268 | 83.4% |
| Embodiment 12 | Al+Nb | 1.54 (Al: 1.23, Nb: 0.31) | 8.8 | 1.24 | 0.271 | 89.3% |
| Embodiment 13 | Al+Nb | 1.54 (Al: 1.23, Nb: 0.31) | 15.5 | 1.56 | 0.265 | 80.3% |
| Embodiment 14 | Al+Nb | 1.54 (Al: 1.23, Nb: 0.31) | 12.6 | 1.76 | 0.263 | 78.3% |

(continued)

|  | Type of doping element | Content of doping element (%) | $D_{v50}$ of positive active material ($\mu$m) | $(D_{v90}-D_{v10})/D_{v50}$ | B/A (30% SOC) | Ratio of -10 °C discharge capacity to 25 °C discharge capacity |
|---|---|---|---|---|---|---|
| Embodiment 15 | Al+Nb | 1.54 (Al: 1.23, Nb: 0.31) | 8.5 | 0.9 | 0.275 | 90.5% |
| Embodiment 16 | Al+Nb | 1.54 (Al: 1.23, Nb: 0.31) | 17.8 | 2.0 | 0.261 | 73.5% |
| Embodiment 17 | Al+Nb | 1.54 (Al: 1.23, Nb: 0.31) | 23.6 | 2.5 | 0.258 | 70.5% |

**Table 4**

|  | Mass ratio between DMC and EC | Cycle capacity retention rate under 10 °C | Capacity recovery rate after 7 days of storage under 60 °C |
|---|---|---|---|
| Embodiment 2 | 6.2 | 89.3% | 93.5% |
| Embodiment 18 | 3.1 | 87.7% | 94.2% |
| Embodiment 19 | 4 | 88.7% | 94.1% |
| Embodiment 20 | 6.5 | 90.2% | 93.0% |
| Embodiment 21 | 7 | 89.6% | 91.8% |
| Embodiment 22 | 3 | 85.2% | 94.1% |
| Embodiment 23 | 7.2 | 86.9% | 90.2% |

**Table 5**

|  | Sultone compound | | multi-nitrile compound | | Content of biphenyl (%) | Cycle capacity retention rate under 10 °C | Capacity recovery rate after 7 days of storage under 60 °C |
|---|---|---|---|---|---|---|---|
|  | Type | Content (%) | Type | Content (%) |  |  |  |
| Embodiment 2 | / | / | / | / | / | 74.7% | 93.5% |
| Embodiment 24 | 1,3-propane sultone | 0.1 | Succinonitrile | 1.5 | / | 76.0% | 94.2% |
| Embodiment 25 | 1,3-propane sultone | 2 | Succinonitrile | 1.5 | / | 79.1% | 94.3% |

(continued)

|  | Sultone compound | | multi-nitrile compound | | Content of biphenyl (%) | Cycle capacity retention rate under 10 °C | Capacity recovery rate after 7 days of storage under 60 °C |
|  | Type | Content (%) | Type | Content (%) |  |  |  |
|---|---|---|---|---|---|---|---|
| Embodiment 26 | 1,3-propane sultone | 5 | Succinonitrile | 1.5 | / | 78.1% | 94.2% |
| Embodiment 27 | 1,3-propane sultone | 2 | Succinonitrile | 0.1 | / | 79.0% | 93.0% |
| Embodiment 28 | 1,3-propane sultone | 2 | Succinonitrile | 1 | / | 79.1% | 94.1% |
| Embodiment 29 | 1,3-propane sultone | 2 | Succinonitrile | 5 | / | 78.8% | 94.0% |
| Embodiment 30 | 2-fluoro-1,3-propane sultone | 1 | Adiponitrile | 1 | / | 78.6% | 94.2% |
| Embodiment 31 | / | / | / | / | 1 | 77.1% | 93.8% |
| Embodiment 32 | 1,3-propane sultone | 2 | / | / | 1 | 79.5% | 94.0% |

In Table 5, "/" means "not contained" or "not detected".

Table 6

|  | $(D_{v90}-D_{v10})/D_{v50}$ of negative active material | Cycle capacity retention rate under 10 °C | Capacity recovery rate after 7 days of storage under 60 °C |
|---|---|---|---|
| Embodiment 2 | 2.1 | 89.3% | 93.5% |
| Embodiment 33 | 0.9 | 92.2% | 94.1% |
| Embodiment 34 | 1.2 | 92.9% | 94.4% |
| Embodiment 35 | 1.5 | 93.9% | 94.5% |
| Embodiment 36 | 1.8 | 92.8% | 93.8% |
| Embodiment 37 | 2 | 92.6% | 93.6% |
| Embodiment 38 | 0.8 | 87.3% | 92.5% |

As can be seen from Embodiments 1 to 4 and Comparative Embodiments 1 to 2, in the positive active material, the peak intensity B of the second diffraction peak and the peak intensity A of the first diffraction peak fall within the range specified herein, and the capacity recovery rate of the lithium-ion battery after 7 days of storage under 60 °C is significantly increased, indicating that the lithium-ion battery according to this application achieves excellent high-temperature storage performance.

The cost of the NCM material is approximately 4.2 times that of the LMO material. As can be seen from Embodiments 1 to 4 and Comparative Embodiment 1, in contrast to the lithium-ion battery prepared with no NCM (for example, in Comparative Embodiment 1), this application can significantly improve the high-temperature storage performance of the lithium-ion battery, but the increase of the manufacturing cost of the positive electrode is not as high as the significant increase of the cost of the NCM material. As can be seen from Embodiments 1 to 4 and Comparative Embodiment 2, further increasing the content of NCM in the positive active material results in limited improvement of the high-temperature cycle performance of the lithium-ion battery, but increases the manufacturing cost of the positive electrode significantly. Evidently, controlling the content of NCM in the positive active material to fall within the range specified herein helps to achieve a lithium-ion battery with excellent high-temperature storage performance and is conducive to the cost control of the lithium-ion battery.

As can be seen from Embodiment 3 and Comparative Embodiment 3, the B/A ratio is made to fall within the range specified herein by optimizing the preparation process of the positive active material, thereby helping to achieve a lithium-ion battery with excellent high-temperature storage performance.

Parameters such as the type of the doping element in the positive active material, the content of the doping element, the $I_2/I_1$ ratio, and the offset of the $2\theta$ angle of the first diffraction peak may also affect the performance of the lithium-ion battery. As can be seen from Embodiments 5 to 11, by controlling the foregoing parameters, this application can achieve a lithium-ion battery that is excellent in high-temperature cycle performance, high-temperature storage performance, and specific capacity.

As can be seen from Embodiments 12 to 17, by controlling the $(D_{v90}-D_{v10})/D_{v50}$ ratio of the positive active material, this application increases the ratio of - 10 °C discharge capacity to 25 °C discharge capacity, and in turn, improves the low-temperature kinetic performance of the lithium-ion battery.

As can be seen from Embodiment 18 to Embodiment 23, by controlling the mass ratio of DMC to EC in the electrolytic solution, this application can further enhance the high-temperature storage performance of the lithium-ion battery and improve the low-temperature kinetic performance of the lithium-ion battery.

As can be seen from Embodiment 2 and Embodiments 24 to 32, when the electrolytic solution contains additives such as a sultone compound, a multi-nitrile compound, and biphenyl, this application can further enhance the high-temperature storage performance of the lithium-ion battery and improve the low-temperature kinetic performance of the lithium-ion battery.

As can be seen from Embodiments 33 to 38, by controlling the $(D_{v90}-D_{v10})/D_{v50}$ ratio of the negative active material, this application can further enhance the high-temperature storage performance and low-temperature kinetic performance of the lithium-ion battery.

What is described above is merely preferred embodiments of this application, but is not intended to limit this application. Any modifications, equivalent substitutions, and improvements made within the spirit and principles of this application still fall within the protection scope of this application.

## Claims

1. An electrochemical device, comprising a positive electrode, a negative electrode, and an electrolytic solution, wherein the positive electrode comprises a positive active material;

   the positive active material comprises a manganese-containing composite material, and a lithium manganese oxide characteristic peak (400) as a first diffraction peak and a lithium nickel cobalt manganese oxide characteristic peak (104) as a second diffraction peak are comprised in a range of 40° to 46° in an XRD diffraction pattern of the positive active material under a condition of 30% SOC to 40% SOC, a $2\theta$ angle of the first diffraction peak is smaller than a $2\theta$ angle of the second diffraction peak; and
   a peak intensity of the first diffraction peak is A, a peak intensity of the second diffraction peak is B, and satisfying: $0.01 \leq B/A \leq 0.55$.

2. The electrochemical device according to claim 1, wherein, under a condition of 60% SOC, in the XRD diffraction pattern of the positive active material, a peak area of the first diffraction peak is $I_1$, a peak area of the second diffraction peak is $I_2$, and satisfying: $0.1 \leq I_2/I_1 \leq 0.5$.

3. The electrochemical device according to claim 1, wherein, in a process of increasing a state of charge of the electrochemical device from 0% SOC to 100% SOC, the 2θ angle of the first diffraction peak shifts toward a high angle by 0.5° to 1°.

4. The electrochemical device according to claim 1, wherein the electrochemical device satisfies at least one of the following conditions a) to c):

   a) based on a mass of the positive active material, a mass percentage of lithium nickel cobalt manganese oxide is 0.5% to 35%;
   b) based on the mass of the positive active material, a mass percentage of lithium manganese oxide is 50% to 92%; and
   c) the positive active material further comprises a doping element, the doping element comprises at least one of Al, Mg, or Nb, and, based on the mass of the positive active material, a mass percentage of the doping element is 0.1% to 2.5%.

5. The electrochemical device according to claim 1, wherein a particle size distribution of the positive active material satisfies: $0.9 \leq (D_{v90} - D_{v10})/D_{v50} \leq 2.0$.

6. The electrochemical device according to claim 1, wherein the electrochemical device satisfies at least one of the following conditions d) to e):

   d) the electrolytic solution comprises a solvent, the solvent comprises dimethyl carbonate, ethylene carbonate, and propylene carbonate, and a mass ratio between the dimethyl carbonate and the ethylene carbonate is 3.1 to 7; and
   e) the electrolytic solution further comprises at least one of a sultone compound, a multi-nitrile compound, a boron-containing lithium salt, ethylene sulfate, biphenyl, or vinylene carbonate.

7. The electrochemical device according to claim 6, wherein the electrochemical device satisfies at least one of the following conditions f) to g):

   f) the sultone compound comprises at least one of 1,3-propane sultone, 1,3-butane sultone, or 2-fluoro-1,3-propane sultone, and, based on a mass of the electrolytic solution, a mass percentage of the sultone compound is 0.01% to 5%; and
   g) the multi-nitrile compound comprises at least one of succinonitrile, adiponitrile, fumaronitrile, glutaronitrile, or 1,3,6-hexanetricarbonitrile, and, based on the mass of the electrolytic solution, a mass percentage of the multi-nitrile compound is 0.01% to 5%.

8. The electrochemical device according to claim 1, wherein the negative electrode comprises a negative active material, and a particle size distribution of the negative active material satisfies: $1.8 \leq (D_{v90} - D_{v10})/D_{v50} \leq 2.8$.

9. An electronic device, comprising the electrochemical device according to any one of claims 1 to 8.

FIG. 1

FIG. 2

## INTERNATIONAL SEARCH REPORT

| | International application No. |
|---|---|
| | **PCT/CN2021/121261** |

| **A.** | **CLASSIFICATION OF SUBJECT MATTER** |
|---|---|

H01M 4/505(2010.01)i；  H01M 10/0525(2010.01)i

According to International Patent Classification (IPC) or to both national classification and IPC

| **B.** | **FIELDS SEARCHED** |
|---|---|

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 正极, 阴极, 活性材料, 活性物质, 锰酸锂, 镍钴锰酸锂, 钴镍锰酸锂, 三元, 衍射, 峰, 强, 角, 20, 荷电状态, positive, cathode, "active material", lithium, manganate, nickel, cobalt, ternary, diffraction, peak, intensity, angle, SOC

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| A | CN 102148404 A (CHONGQING YONGTONG INFORMATION ENGINEERING INDUSTRIAL CO., LTD.) 10 August 2011 (2011-08-10)<br>    description, paragraphs 0005-0016 | 1-9 |
| A | CN 110556531 A (TIANMU LAKE INSTITUTE OF ADVANCED ENERGY STORAGE TECHNOLOGY CO., LTD.) 10 December 2019 (2019-12-10)<br>    entire document | 1-9 |
| A | CN 111233052 A (TSINGHUA SHENZHEN INTERNATIONAL GRADUATE SCHOOL) 05 June 2020 (2020-06-05)<br>    entire document | 1-9 |
| A | CN 109449446 A (NINGDE CONTEMPORARY AMPEREX TECHNOLOGY CO., LTD.) 08 March 2019 (2019-03-08)<br>    entire document | 1-9 |
| A | CN 111816875 A (HUAI'AN NEW ENERGY MATERIALS TECHNOLOGY RESEARCH INSTITUTE) 23 October 2020 (2020-10-23)<br>    entire document | 1-9 |

☑ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 June 2022** | **27 June 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/121261** |

**C. DOCUMENTS CONSIDERED TO BE RELEVANT**

| Category* | Citation of document, with indication, where appropriate, of the relevant passages | Relevant to claim No. |
| --- | --- | --- |
| A | JP 2015103331 A (SAMSUNG SDI CO., LTD.) 04 June 2015 (2015-06-04)<br>entire document | 1-9 |

Form PCT/ISA/210 (second sheet) (January 2015)

**INTERNATIONAL SEARCH REPORT**
Information on patent family members

| International application No. |
| --- |
| **PCT/CN2021/121261** |

| Patent document cited in search report | | | Publication date (day/month/year) | Patent family member(s) | | | Publication date (day/month/year) |
| --- | --- | --- | --- | --- | --- | --- | --- |
| CN | 102148404 | A | 10 August 2011 | None | | | |
| CN | 110556531 | A | 10 December 2019 | None | | | |
| CN | 111233052 | A | 05 June 2020 | None | | | |
| CN | 109449446 | A | 08 March 2019 | WO | 2020078357 | A1 | 23 April 2020 |
| CN | 111816875 | A | 23 October 2020 | None | | | |
| JP | 2015103331 | A | 04 June 2015 | KR | 20150059594 | A | 01 June 2015 |
| | | | | US | 2015147653 | A1 | 28 May 2015 |

Form PCT/ISA/210 (patent family annex) (January 2015)

20